# EUROPEAN PATENT APPLICATION

(11) **EP 2 621 142 A1**
(43) Date of publication of application: **31.07.2013**
(21) Application number: 12191296.8
(22) Date of filing: 05.11.2012
(51) Int. Cl.: H04L 29/08

(54) **Apparatus and Method for Determining Duplication of Content in Portable Terminal**

(30) Priority: 26.01.2012 KR 20120007671
(71) Applicant: Samsung Electronics Co., Ltd, Gyeonggi-do 443-742 (KR)
(72) Inventor: Lee, Dong-Jun, Gyeonggi-do (KR)
(74) Representative: Jenkins, Richard Gavin

(57) **Abstract**

An apparatus performs a method for determining duplication of content in portable terminal. A method for operating a portable terminal includes downloading at least one content of a predetermined size from a server, and determining whether the same content is already stored in the portable terminal, based on the size of the downloaded content.

## Description

### TECHNICAL FIELD OF THE INVENTION

The present disclosure relates to managing content in an electronic device.

### BACKGROUND OF THE INVENTION

With the functional development of portable terminals, users can download and use various contents from servers. For example, users can download and use various contents such as applications, moving images, pictures, and music files from servers.

However, when downloading a desired content from a server to a portable terminal, a user may not know whether the desired content is already stored in the portable terminal. Therefore, despite the desired content being already stored in the portable terminal, the user may again download the same content from the server.

In order to determine whether the desired content is already stored in the portable terminal, the user may need to search for and check one by one the contents stored in the portable terminal. Also, since the storage space of the portable terminal is limited, when the stored content is downloaded again, it causes a waste of the data storage space in the portable terminal.

There is therefore a need to develop an apparatus and method for a portable terminal that can, when a user downloads a specific content from a server, determine whether the same content is already stored in the portable terminal, and notify the determination result to the user.

### SUMMARY OF THE INVENTION

To address the above-discussed deficiencies of the prior art, it is a primary object to provide an apparatus and method that can, when a user downloads a desired content, determine whether the desired content is already stored in a portable terminal, and notify a duplication of the content to the user.

Another object of the present disclosure is to provide an apparatus and method that can store an output value, which is generated by copying a predetermined portion of a header of a file stored in a portable terminal and substituting the copy value as an input value of a hash algorithm, in a table, and rapidly determine a duplication of a desired content by the table when downloading the desired content.

Another object of the present disclosure is to provide an apparatus and method that can download only a portion of a header of a desired content to be downloaded by a portable terminal, compare a duplication with a hash table stored in the portable terminal, and rapidly determine whether the desired content is already stored in the portable terminal.

According to one aspect of the present disclosure, a method for operating a portable terminal includes downloading at least one content having a predetermined size from a server, and determining whether the same content is already stored in the portable terminal, based on the size of the downloaded content.

According to another aspect of the present disclosure, an apparatus for a portable terminal includes a communication module configured to download at least one content having a predetermined size from a server. The apparatus also includes a control unit configured to determine whether the same content is already stored in the portable terminal, based on the size of the downloaded content.

Other aspects, advantages, and salient features of the disclosure will become apparent to those skilled in the art from the following detailed description, which, taken in conjunction with the annexed drawings, discloses exemplary embodiments of the disclosure.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 is a diagram illustrating a configuration of a portable terminal and a server according to an embodiment of the present disclosure;

Fig. 2 is a diagram representing the accuracy of a content in a percent ratio with respect to the size of an N constant value according to an embodiment of the present disclosure;

FIG. 3 is a diagram illustrating a hash table stored in a portable terminal according to an embodiment of the present disclosure;

FIGS. 4A and 4B illustrate an embodiment of determining whether a desired download file is already stored in a portable terminal according to the present disclosure, and notifying a file duplication to a user;

FIG. 5 is a flow chart illustrating a method for determining a duplication of a content in a portable terminal according to an embodiment of the present disclosure; and

FIG. 6 is a block diagram illustrating a configuration of a portable terminal according to an embodiment of the present disclosure.

### DETAILED DESCRIPTION OF THE INVENTION

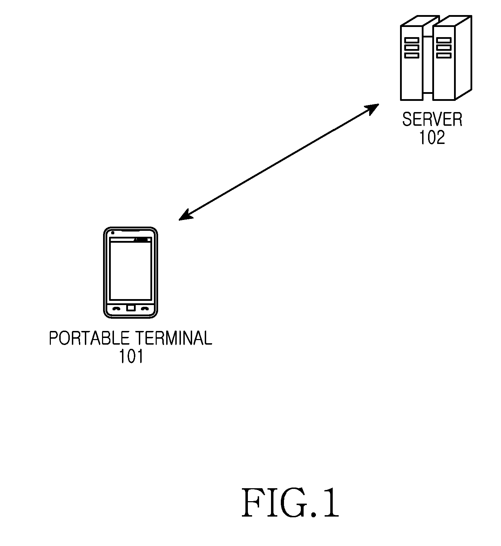

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device. The present disclosure relates with a technology for managing contents in an electronic device. The electronic device includes, but not limited, a portable terminal, a mobile communication device, a cellular phone, a smart phone and a laptop computer including a communication function.

Exemplary embodiments of the present disclosure will be described herein below with reference to the accompanying drawings so that those skilled in the art can easily embody the present disclosure. In the following description of the embodiments, detailed descriptions of well-known functions or configurations will be omitted since they would unnecessarily obscure the subject matters of the present disclosure. Also, like reference numerals denote like elements through the specification and drawings.

FIG. 1 is a diagram illustrating a configuration of a portable terminal and a server according to an embodiment of the present disclosure. As illustrated in FIG. 1, in order to download a specific content stored in a server 102, a portable terminal 101 requests the specific content from the server 102. Upon receiving a request for the specific content from the portable terminal 101, the server 102 transmits the specific content to the portable terminal 101.

The portable terminal 101 generates and stores a hash table before downloading the specific content from the server 102. A process for generating and storing the hash table in the portable terminal 101 will be described below in detail. First, the portable terminal 101 receives an N constant value from a user. Herein, the N constant value is used as an input value of a hash algorithm, and is defined by setting a content size to a byte value. Specifically, a size of the input value is predetermined so that it is used as an input value of a hash algorithm, which will be described later. As described above, the N constant value may be set by the user, or may be predefined and stored in the portable terminal 101. Since the N constant value is a flexible value that may vary according to the speed of a network and the processing speed of the portable terminal, the user may set the N constant value according to the speed of the network or the processing speed of the portable terminal.

After the user inputs the N constant value to the portable terminal 101, the portable terminal 101 uses the input N constant value to generate an X value to be substituted in the hash algorithm. Herein, the X value is defined as an input value that is generated by copying a header portion of at least one content stored in the portable terminal 101 by the N constant value. Specifically, upon receiving the N constant value set by the user, the portable terminal 101 generates an input value by copying a header portion of all contents stored in the portable terminal 101 by the N constant value. For example, when the user has set an N constant value to 1024, the portable terminal 101 receives the N constant value from the user, and generates an input value by copying a content with a size of 1024 bytes among a header portion of all contents stored in the portable terminal 101.

After receiving the N value from the user and generating the input value, the portable terminal 101 generates a Y value by using the hash algorithm. The hash algorithm may include a Message-Digest algorithm 5 (MD5), a Secure Hash Algorithm 1 (SHA1), or the like. Herein, the Y value is defined as an output value generated by the above hash algorithm. For example, if a size of the N constant is 1024, MD5 may be used as the hash algorithm. When the N constant size is set to 1024, the portable terminal 101 generates a hexadecimal input value. Thereafter, when the generated input value is substituted in the MD5 hash algorithm, an output value represented by 32 hexadecimal digits is generated. As another example of the output value, SHA1 may be used as the hash algorithm. When the N constant size is set to 1024, the portable terminal 101 generates a hexadecimal input value. Thereafter, when the generated input value is substituted in the SHA1 hash algorithm, an output value represented by 40 hexadecimal digits is generated.

When the output value is generated by using the hash algorithm, the generated output value is stored in a hash table. Herein, the hash table is defined as a table that stores the output value and the titles of all contents stored in the portable terminal 101. Specifically, the title of each content is stored together with the output value of the relevant content. Thus, in order to download a specific content from the server 102, the portable terminal 101 may download only a header portion of the specific content and rapidly compare the same with the output value stored in the hash table.

In order to download a specific content from the server 102, the portable terminal 101 requests the specific content from the server 102. Upon receiving a request for the specific content from the portable terminal 101, the server 102 transmits the specific content to the portable terminal 101. The portable terminal 101 receiving the specific content from the server 102 does not download all of the specific content. The portable terminal 101 downloads only a portion of the specific content, corresponding to the above N constant, and generates an R value by using the hash algorithm. Herein, the R value is defined as a value that is generated through the hash algorithm after downloading only a portion of the specific content corresponding to the N constant. For example, when the N constant is set to 1024, the portable terminal 101 downloads only a portion of a header file of the specific content, corresponding to a size of 1024, from the server 102 and generates the R value by using the hash algorithm. The portable terminal 101 may compare the generated R value with the output value in the hash value stored therein, to determine whether the specific content to be downloaded from the server 102 is stored therein. As described above, as the size of the N constant value set by the user increases, the accuracy thereof increases.

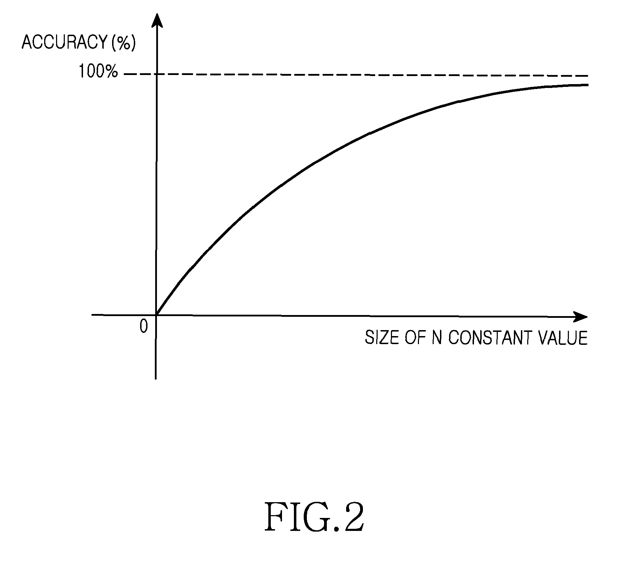

Fig. 2 is a diagram representing the accuracy of a content in a percent ratio with respect to the size of an N constant value according to an embodiment of the present disclosure. Herein, the N constant value is set by the user. The N constant value is used as an input value of the hash algorithm, and is defined by setting a constant content to a byte value. Specifically, the N constant value is the size of an input value that is set by the user to be used as an input value of the hash algorithm. As an example of the use of an N constant, the N constant is used as an input value of the hash algorithm to store a hash table that is generated in the portable terminal. Specifically, the N constant value is received from the user, and a header portion of all content stored in the portable terminal is copied by the size of the N constant value to generate an X value as an input value. Using the hash algorithm, the generated X value is substituted as the input value. The Y value is outputted as the output value generated through the hash algorithm. The hash table is generated and it is stored therein. That is, the N constant value is used as a basis for generating the hash table.

As another example of the use of an N constant value, the N constant value is used by the portable terminal to first download only a portion of a specific content, corresponding to the size of the N constant, from the server. For example, when the N constant value is set to 1024, the portable terminal downloads only a portion of a header portion of the specific content, corresponding to a size of 1024, from the server. That is, the N value is used to determine the size of a content to be downloaded.

FIG. 2 illustrates the accuracy of the content in a percent ratio with respect to the size of the N constant value. It can be seen from FIG. 2, that the reliability of the duplication determination about the content increases gradually as the size of the N constant value increases. That is, it can be seen that the reliability of the determination as to whether the desired download content is already stored in the portable terminal increases when the user sets the N constant value to be large. The N constant value may be set by the user, and may be predefined and stored in the portable terminal. Since the N constant value is a flexible value that may vary according to the speed of a network and the processing speed of the portable terminal, the user may set the N constant value according to the speed of the network or the processing speed of the portable terminal. When a value of approximately 100 kilobytes is set, an accuracy of about 80% to 90% can be achieved. That is, when the N constant value is set to approximately 100,000, the reliability of the determination as to whether the desired download content is already stored in the portable terminal is about 80% to 90%.

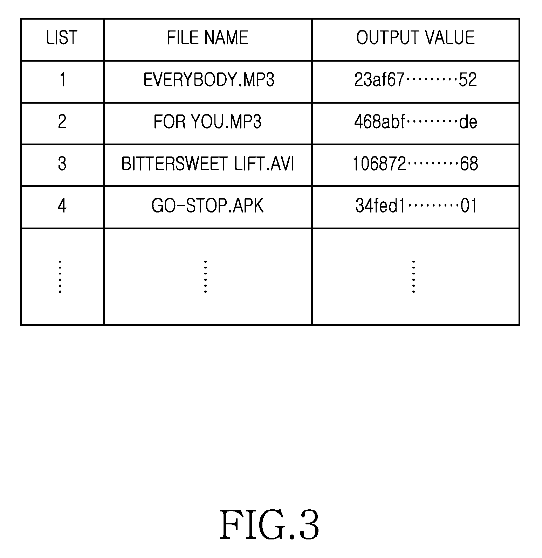

FIG. 3 is a diagram illustrating a hash table stored in a portable terminal according to an embodiment of the present disclosure. As illustrated in FIG. 3, the hash table may include a list, a file name, and an output value. Herein, the hash table is defined as a table in which an output value generated through a hash algorithm is stored together with a list and a file name. Specifically, the portable terminal generates and stores a hash table before downloading a specific content. A process for generating and storing the hash table in the portable terminal 101 will be described below in detail. First, the portable terminal receives an N constant value from a user. Herein, the N constant value is used as an input value of a hash algorithm, and is defined by setting a content size to a byte value. Specifically, a size of the input value is predetermined so that it is used as an input value of a hash algorithm. As described above, the N constant value may be set by the user, or may be predefined and stored in the portable terminal. Since the N constant value is a flexible value that may vary according to the speed of a network and the processing speed of the portable terminal, the user may set the N constant value according to the speed of the network or the processing speed of the portable terminal.

After the user inputs the N constant value to the portable terminal, the portable terminal uses the input N constant value to generate an X value to be substituted in the hash algorithm. Herein, the X value is defined as an input value that is generated by copying a header portion of at least one content stored in the portable terminal by the N constant value. Specifically, when receiving the N constant value set by the user, the portable terminal generates an input value by copying a header portion of all contents stored in the portable terminal by the N constant value. For example, when the user has set an N constant value to 1024, the portable terminal receives the N constant value from the user, and generates an input value by copying a content with a size of 1024 bytes among a header portion of all contents stored in the portable terminal.

After receiving the N value from the user and generating the input value, the portable terminal generates a Y value by using the hash algorithm. The hash algorithm may include MD5, SHA1, or the like. Herein, the Y value is defined as an output value generated by the above hash algorithm. For example, if a size of the N constant is 1024, MD5 may be used as the hash algorithm. When the N constant size is set to 1024, the portable terminal generates a hexadecimal input value. Thereafter, when the generated input value is substituted in the MD5 hash algorithm, an output value represented by 32 hexadecimal digits. As another example of the output value, SHA1 may be used as the hash algorithm. When the N constant size is set to 1024, the portable terminal generates a hexadecimal input value. Thereafter, when the generated input value is substituted in the SHA1 hash algorithm, an output value represented by 40 hexadecimal digits .

When the output value is generated through the hash algorithm, the generated output value is stored in a hash table. Herein, the hash table is defined as a table that stores the output value and the titles of all contents stored in the portable terminal. Specifically, the title of each content is stored together with the output value of the relevant content. Thus, in order to download a specific content from the server, the portable terminal may download only a header portion of the specific content and rapidly compare the same with the output value stored in the hash table.

A more detailed description will be made with reference to the hash table illustrated in FIG. 3. As illustrated in FIG. 3, the hash table includes a list, a file name, and an output value that are stored in the portable terminal. Regarding a list 1 illustrated in FIG. 3, it can be seen that a music file "Everybody" is stored with an extension name of MP3 in the portable terminal, and a corresponding output value is '23af67...52'. Herein, as described above, when an MD5 hash algorithm is used, the output value may be represented by 32 digits expressed in hexadecimal. When a SHA1 hash algorithm is used, the output value may be represented by 40 digits expressed in hexadecimal. Similarly, regarding a list 2, it can be seen that a music file "For You" is stored with an extension name of MP3 in the portable terminal, and a corresponding output value is '468abf...de'. Regarding a list 3, it can be seen that a video file "Bittersweet Lift" is stored with an extension name of AVI in the portable terminal, and a corresponding output value is '106872 ... 68'. Regarding a list 4, it can be seen that an application file "Go-Stop" is stored with an extension name of APK in the portable terminal, and a corresponding output value is '34fed1...01'.

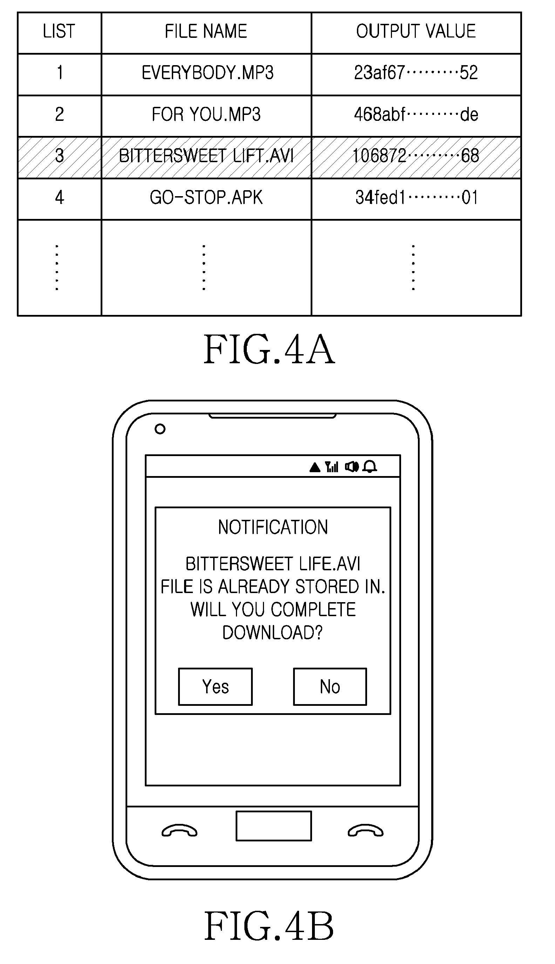

FIGS. 4A and 4B illustrate an embodiment of determining whether a desired download file is already stored in a portable terminal according to the present disclosure, and notifying a file duplication to a user. FIG. 4A is a diagram illustrating an embodiment of determining a duplication of a file to be downloaded in a portable terminal, by using a hash table stored in the portable terminal according to the present disclosure. As described above, the portable terminal generates and stores all contents therein as a hash table, by using a hash algorithm. Thereafter, the portable terminal requests a download of a specific content from a server. When receiving the download request from the portable terminal, the server transmits the specific content to the portable terminal. The portable terminal generates an R value as an output value by receiving only a portion of a header portion of the specific content corresponding to an N constant value, and substituting the same as an input value of a hash algorithm. The portable terminal compares the generated R value with a Y value that is an output value stored in the hash table. For example, as illustrated in FIG. 4A, when the generated R value is '106872...68', the portable terminal can determine that the R value is identical to the Y value stored in the hash table. This indicates that a video file "Bittersweet Life" is already stored in the portable terminal of the user. In contrast, conventionally, in order to determine whether a desired download content is already stored in a portable terminal, a user may need to check one by one the contents stored in the portable terminal. Also, since the storage space of the portable terminal is limited, when a content is stored in a duplicate manner, it causes a waste of the data storage space in the portable terminal. However, the portable terminal according to the present disclosure can determine that a desired video file "Bittersweet Life" is already stored therein, even without downloading all of the video file from the server.

FIG. 4B is a diagram illustrating an embodiment of notifying a content duplication to the user when a specific content to be downloaded from the server to the portable terminal is already stored in the portable terminal according to the present disclosure. As illustrated in FIG. 4B, when a file to be downloaded from the server to the portable terminal is already stored in the portable terminal, the portable terminal may display this to the user. For example, when a video "Bittersweet Life" to be downloaded is already stored in the portable terminal, the portable terminal asks the user whether to continue to download the already stored video. Specifically, as described above, the portable terminal according to the present disclosure can determine whether the download file is already stored therein, by downloading only a portion of a header portion of the download file corresponding to an N constant value, without downloading all of the download file from the server. Thus, as illustrated in FIG. 4B, when determining that the same file is already stored therein as a result of the download of only a portion of the file, the portable terminal may notify this to the user. Thus, by detecting the above notification, the user may input information about whether to continue the download, into the portable terminal. When receiving a command for stopping the download of the same file from the user, the portable terminal stops the download. Alternatively, when receiving a command for continuing the download of the same file from the user, the portable terminal continues to download and store the file even when the same file is stored therein. The reason for this is that there may be a situation where the audio quality or the video quality of an already stored file is poor and the user does not like the already stored file, even when the same file is already stored in the portable terminal.

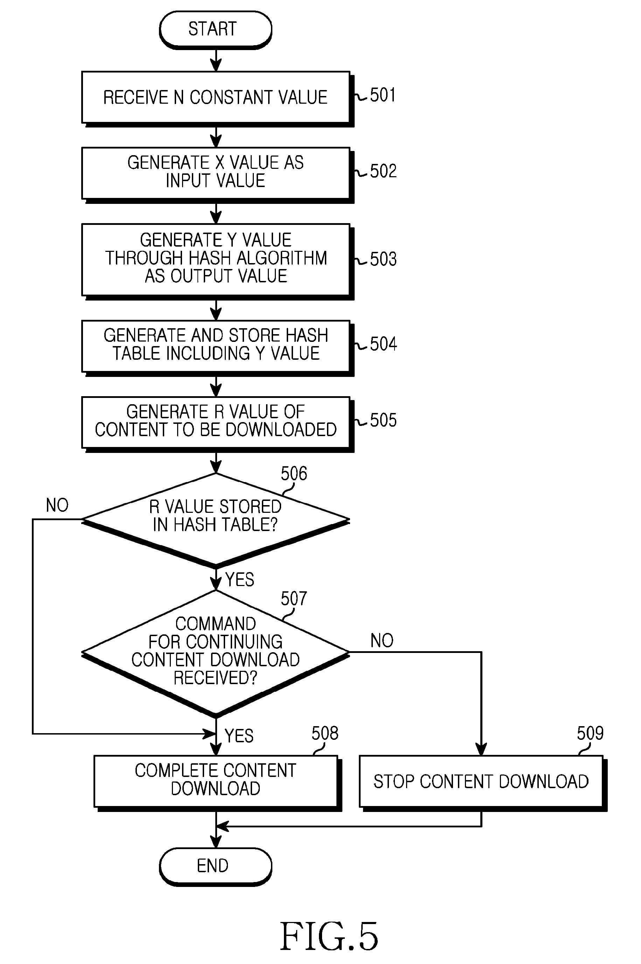

FIG. 5 is a flow chart illustrating a method for determining a content duplication in a portable terminal according to an embodiment of the present disclosure. As illustrated in FIG. 5, the portable terminal receives an N constant value from a user (block 501). Herein, the N constant value is used as an input value of a hash algorithm, and is defined by setting a content size to a byte value. Specifically, a size of the input value is predetermined so that it is used as an input value of a hash algorithm. As described above, the N constant value may be set by the user, or may be predefined and stored in the portable terminal. Since the N constant value is a flexible value that may vary according to the speed of a network and the processing speed of the portable terminal, the user may set the N constant value according to the speed of the network or the processing speed of the portable terminal.

Upon receiving the N constant value from the user, the portable terminal generates an X value as an input to the hash algorithm (block 502). Herein, the X value is defined as an input value that is generated by copying a header portion of at least one content stored in the portable terminal by the N constant value. Specifically, upon receiving the N constant value set by the user, the portable terminal generates an input value by copying a header portion of all contents stored in the portable terminal by the N constant value. For example, when the user has set an N constant value to 1024, the portable terminal receives the N constant value from the user, and generates an input value by copying a content with a size of 1024 bytes among a header portion of all contents stored in the portable terminal.

After generating the X value as the input value, the portable terminal generates a Y value as an output value through a hash algorithm (block 503). Herein, the Y value is defined as an output value generated by the above hash algorithm. For example, if a size of the N constant is 1024, MD5 may be used as the hash algorithm. When the N constant size is set to 1024, the portable terminal generates a hexadecimal input value. Thereafter, when the generated input value is substituted in the MD5 hash algorithm, an output value represented by 32 hexadecimal digits is generated. As another example of the output value, SHA1 may be used as the hash algorithm. When the N constant size is set to 1024, the portable terminal generates a hexadecimal input value. Thereafter, when the generated input value is substituted in the SHA1 hash algorithm, an output value represented by 40 hexadecimal digits is generated.

After generating the Y value through the hash algorithm, the portable terminal generates and stores a hash table including the Y value (block 504). Herein, the hash table is defined as a table that stores the output value and the titles of all contents stored in the portable terminal. Specifically, the title of each content is stored together with the output value of the relevant content. Thus, in order to download a specific content from the server, the portable terminal may download only a header portion of the specific content and rapidly compare the same with the output value stored in the hash table.

Thereafter, the portable terminal generates an R value of a content to be downloaded (block 505). Herein, the R value is defined as a value that is generated through the hash algorithm after downloading only a portion of the specific content corresponding to the N constant. For example, when the N constant is set to 1024, the portable terminal downloads only a portion of a header file of the specific content, corresponding to a size of 1024, from the server and generates the R value by using the hash algorithm. The portable terminal may compare the generated R value with the output value in the hash value stored therein, to determine whether the specific content to be downloaded from the server is stored therein. As described above, as the size of the N constant value set by the user increases, the accuracy thereof increases.

The portable terminal used the generated R value to determine whether the R value is stored in the hash table (block 506). Specifically, in order to download a specific content from the server, the portable terminal requests a download of the specific content from the server. Upon receiving the download request from the portable terminal, the server transmits the specific content to the portable terminal. The portable terminal receiving the specific content from the server does not download all of the specific content. The portable terminal downloads only a portion of the specific content, corresponding to the above N constant, and generates an R value by using the hash algorithm. The portable terminal may compare the generated R value with the output value in the hash value stored therein, to determine whether the specific content to be downloaded from the server is stored therein. As described above, as the size of the N constant value set by the user increases, the accuracy thereof increases.

After determining in block 506 that the R value is stored in the hash table, the portable terminal determines whether a command for continuing the content download from the user is received (block 507). Specifically, after determining that a content to be downloaded is already stored therein, the portable terminal notifies the determination result to the user and proceeds to the next operation. That is, the portable terminal notifies the user that the same content is already stored therein, so that the user may select whether to stop or complete the download.

Even when the same content is already stored therein, the portable terminal receiving a command for continuing the download from the user completes the content download (block 508). For example, even when the same content is already stored therein, if the audio or video quality of the already stored content is poor, the portable terminal may receive a selection of download completion from the user. After determining that the R value is not stored in the hash table, the portable terminal may complete the content download.

When failing to receive a command for continuing the content download from the user in block 507, the portable terminal may stop the content download (block 509) and end the entire process.

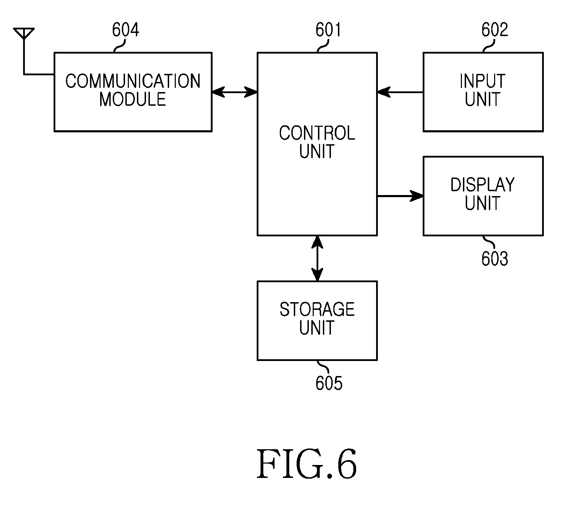

FIG. 6 is a block diagram illustrating a configuration of a portable terminal according to an embodiment of the present disclosure. As illustrated in FIG. 6, the portable terminal according to the present disclosure may include a control unit 601, an input unit 602, a display unit 603, a communication module 604, and a storage unit 605.

The control unit 601 controls an overall operation of the portable terminal. For example, the control unit 601 determines whether the same content is already stored therein, based on the size of a downloaded content. Also, the control unit 601 may check at least one content stored in the portable terminal, copy a predetermined size of a header portion of the content, and substitute the copied header portion in a hash algorithm as an input value. Also, the control unit 601 may determine whether the header portion of the content is downloaded up to the predetermined size, and stop the download when the download with the predetermined size is completed. Also, the control unit 601 may substitute the downloaded header portion of the content in a hash algorithm as an input value, detect an output value generated through the hash algorithm, and compare the output value with the value stored in a hash table. Also, after determining that the same content is not stored therein, the control unit 601 may complete the stopped content download. Also, after receiving a command for stopping the content download, the control unit 601 may stop the content download.

The input unit 602 provides the control unit 501 with input data generated by user selection. For example, the input unit 602 may receive a command for completing the content download, and receive a command for stopping the content download.

The display unit 603 displays story information, menu screen, and state information of the portable terminal under the control of the control unit 601. For example, when it is determined that the same content is already stored in the portable terminal, the display unit 602 displays information about whether to download the content.

A touch sensitive display, called as a touch screen, may be used as the display unit 603. In this situation, a touch input may be performed via the touch sensitive display.

The communication module 604 processes signals transmitted/received through an antenna for voice and data communication. For example, the communication module 604 downloads at least one content of a predetermined size from a server, and requests a download of at least one content from the server.

The storage unit 605 may include a program storage unit for storing a program for controlling an operation of the portable terminal, and a data storage unit for storing data generated during the execution of a program. For example, the storage unit 605 stores an output value generated from the hash algorithm.

The above configurations should be considered in descriptive sense only and not for the purpose of limitation, and those skilled in the art will understand that various changes may be made therein without departing from the scope of the present disclosure. For example, although the respective units are configured and illustrated separately, the control unit 601 may be configured to perform all or some of the functions of the respective units.

It will be appreciated that embodiments of the present disclosure according to the claims and description in the specification can be realized in the form of hardware, software or a combination of hardware and software.

Any such software may be stored in a computer readable storage medium. The computer readable storage medium stores one or more programs (software modules), the one or more programs comprising instructions, which when executed by one or more processors in an electronic device, cause the electronic device to perform a method of the present disclosure.

Any such software may be stored in the form of volatile or nonvolatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present disclosure.

Accordingly, embodiments provide a program comprising code for implementing an apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the disclosure has been shown and described with reference to certain embodiments thereof, it will be understood by those skilled in the art that various changes in form and details may be made therein without departing from the spirit and scope of the disclosure as defined by the appended claims. Therefore, the scope of the disclosure is defined not by the detailed description of the disclosure but by the appended claims, and all differences within the scope will be construed as being included in the present disclosure.

## Claims

1. A method for operating a portable terminal, comprising:
downloading at least one content having a predetermined size from a server; and
determining whether the same content is already stored in the portable terminal, based on the size of the downloaded content which is used as an input value of a hash algorithm.

2. The method of claim 1, further comprising;
checking the at least one content stored in the portable terminal;
copying a header portion of the content with the predetermined size;
substituting the copied header portion in a hash algorithm as an input value; and
storing an output value generated from the hash algorithm.

3. The method of claim 1, further comprising requesting a download of the at least one content from the server.

4. The method of claim 1, wherein downloading the at least one content having the predetermined size from the server comprises:
determining whether the header portion of the content is downloaded by the predetermined size; and
stopping the download when the download with the predetermined size is completed.

5. The method of claim 1, wherein determining whether the same content is already stored in the portable terminal, based on the size of the downloaded content comprises:
substituting a header portion of the downloaded content in a hash algorithm as an input unit;
checking an output value generated from the hash algorithm; and
comparing the output value with a relevant value stored in a hash table of the portable terminal.

6. The method of claim 5, wherein the hash table stores an output value that is generated by copying a header portion of at least one content stored in the portable terminal with the predetermined size and substituting the copied header portion in a hash algorithm as an input value.

7. The method of claim 1 or 5, wherein the hash algorithm includes at least one of Message Digest 5 (MD5) and Secure Hash Algorithm 1 (SHA1).

8. The method of claim 5, further comprising completing the stopped download content after determining that the same content is not stored in the portable terminal as a result of the comparison.

9. The method of claim 5, further comprising:
displaying whether to download the content, after determining that the same content is already stored in the portable terminal as a result of the comparison;
receiving a command for completing the content download; and
completing the content download.

10. The method of claim 9, further comprising:
receiving a command for stopping the content download; and
stopping the content download.

11. An electronic device, comprising:
a communication module configured to download at least one content having a predetermined size from a server; and
a control unit configured to determine whether the same content is already stored in the portable terminal, based on the size of the downloaded content which is used as an input value of a hash algorithm.

12. The electronic device of claim 11, wherein
the control unit is configured to check the at least one content stored in the portable terminal, copy a header portion of the content with the predetermined size, and substitute the copied header portion in a hash algorithm as an input value; and
the apparatus further comprises a storage unit configured to store an output value generated from the hash algorithm

13. The electronic device of claim 11, wherein the communication module is configured to request a download of the at least one content from the server.

14. The electronic device of claim 11, wherein the control unit is configured to determine whether the header portion of the content is downloaded by the predetermined size, and stop the download when the download with the predetermined size is completed.

15. An electronic device, the device comprising,
one or more processors;
a storage unit; and
one or more programs, wherein the one or more programs are stored in the storage unit and configured to cause, when executed by the electronic device, the electronic device to perform the method of any one of claims 1 to 10.
